# EUROPÄISCHE PATENTSCHRIFT

(11) **EP 1 748 696 B1**
(45) Veröffentlichungstag und Bekanntmachung des Hinweises auf die Patenterteilung: **23.07.2008**
(21) Anmeldenummer: 05741817.0
(22) Anmeldetag: 12.05.2005
(51) Int. Cl.: A22C 11/02

(54) **VERPACKUNGSMASCHINE FÜR DIE WURSTHERSTELLUNG**
PACKAGING MACHINE FOR SAUSAGE PRODUCTION
MACHINE DE CONDITIONNEMENT POUR LA FABRICATION DE SAUCISSES

(30) Priorität: 12.05.2004 DE 202004007787 U
(43) Veröffentlichungstag der Anmeldung: 07.02.2007
(73) Patentinhaber: Tipper Tie technopack GmbH, 21509 Glinde (DE)
(72) Erfinder: JÄCKEL, Gunnar, 21271 Asendorf (DE)
(74) Vertreter: Glawe, Delfs, Moll
(86) Internationale Anmeldenummer: PCT/EP2005/005187
(87) Internationale Veröffentlichungsnummer: WO 2005/110100

(56) Entgegenhaltungen:
- EP-A- 1 428 437
- DE-A1- 3 540 370
- DE-C1- 3 608 777
- US-A- 6 132 302

## Beschreibung

Die Erfindung betrifft eine Verpackungsmaschine für die Wurstherstellung nach dem Oberbegriff des Schutzanspruchs 1. Eine derartige Maschine ist aus DE-36 08 777 bekannt.

Gattungsgemäße Verpackungsmaschinen weisen ein Füllrohr mit einem Ein- und einem Austrittsende auf. In das Eintrittsende füllt eine Füllmaschine Wurstbrät, das dann durch das Füllrohr der Verpackungsmaschine zugeführt wird. Über das Austrittsende des Füllrohrs ist ein einseitig verschlossener Wurstdarm gestülpt. Durch den Druck des durch das Rohr gestoßenen Bräts wird dieser nach und nach vom Rohr abgezogen. In Füllrichtung folgt auf das Austrittsende des Füllrohrs eine Verschlusseinrichtung, die den gefüllten Darm abschnittsweise verschließt, z.B. mit Klammern, so dass nach und nach einzelne Würste abgepackt werden.

Für eine ordnungsgemäße Funktion der Maschine ist entscheidend, dass der Darm möglichst gleichmäßig vom Rohr abgezogen wird. Um dies zu erreichen, ist bekannt, der Bewegung des Darms auf dem Füllrohr eine Reibkraft entgegenzusetzen. Dazu dient eine sog. Darmbremse. Eine Darmbremse kann jeder Gegenstand sein, der eine solche Reibkraft auf die Außenseite des bewegten Darms auszuüben vermag. Üblicherweise sind dies Ringe aus Gummi oder ähnlich elastischem Material, die das Füllrohr eng umschließen, so dass das Füllrohr nur ein schmaler Ringspalt umgibt. Denkbar ist auch, dass das elastische Material auf dem Rohr aufliegt und sich ein Ringspalt erst dadurch ergibt, dass ein Darm zwischen Rohr und Darmbremse gezogen wird. Im Regelfall besteht die Darmbremse aus mehreren Komponenten, also neben der oder den Wirkkomponente(n), d.h. dem oder den eigentlichen auf dem Darm aufliegenden Körper(n), z.B. aus einer Halterung für diesen Körper sowie einem Gehäuse. Die Komponenten der Darmbremse bestehen zumeist aus Kunststoff bzw. Gummi. Bekannt sind aber auch Komponenten aus Metall.

Damit die Darmbremse ihre Zwecke erfüllen kann, ist sie im Bereich des Austrittsendes des Füllrohrs angeordnet. In diesem Bereich befindet sie sich in ihrer Arbeitsstellung. Die Füllposition ist dabei die Position der Darmbremse innerhalb der Arbeitsstellung, in der sich die Darmbremse beim Füllen des Darms befindet. Die Wirkkomponenten befinden sich dann auf dem Rohr nahe an dessen Austrittsende. Um das Aufziehen eines Darms zu vereinfachen, sehen bekannte Vorrichtungen vor, dass die Darmbremse innerhalb der Arbeitsstellung leicht aus der Füllposition in eine Darmwechselposition bewegbar ist. Dies wird durch eine Verfahrbarkeit oder Verschwenkbarkeit der Darmbremse erreicht.

Zu Wartungs- und Reinigungszwecken ist die Darmbremse aus der Arbeitsstellung lösbar.

In der Praxis besteht das Problem, dass manchmal vergessen wird, nach einer Wartung oder Reinigung der Darmbremse diese wieder in ihre Arbeitsstellung zurück zu bringen.

Die Erfindung stellt sich die Aufgabe, auf einfache Weise eine automatische Feststellung zu ermöglichen, ob sich die Darmbremse in ihrer Arbeitsstellung befindet. Sie löst diese Aufgabe durch die Merkmale des kennzeichnenden Teils des Schutzanspruchs 1.

Ein induktiver Sensor im Sinne der Erfindung ist ein Messgerät, das über elektromagnetische Induktion misst, ob sich metallische Gegenstände in seiner Nähe befinden. Die Stärke des Ausgangssignals des Sensors hängt insbesondere davon ab, wieviel und wie nah metallisches Material sich am Sensor befindet.

Das Messfeld eines induktiven Sensors ist der räumliche Bereich, in dem der Sensor noch Änderungen der Lage und/oder der Menge metallischen Materials wahrnimmt, d.h. in dem solche Änderungen zu einer Änderung des Ausgangssignals führen.

Wo sich die metallische Komponente im Einzelnen auf der lösbaren Darmbremse befindet, ist unerheblich. Jedenfalls in der Arbeitsstellung der Darmbremse befindet sich die metallische Komponente im Messfeld des induktiven Sensors, so dass sie von ihm detektiert wird. Auf diese Weise kann anhand des Ausgangssignals festgestellt werden, ob sich die Darmbremse in ihrer Arbeitsstellung befindet. Im Einzelnen ist es denkbar, dass die Bedienperson die Darmbremse in ihre Arbeitsstellung bringt, dann ein Programmiersignal auslöst, wodurch eine Speichereinheit das dann gelieferte Ausgangssignal des induktiven Sensors aufnimmt (Soll-Signal). Anschließend vergleicht eine Auswerteeinheit ständig das gespeicherte Soll-Signal mit dem laufend abgegriffenen Ausgangssignal des induktiven Sensors (Ist-Signal). Stellt die Auswerteeinheit eine Abweichung fest, wobei eine ggf. einstellbare Toleranz berücksichtigt werden kann, liefert sie ein Warnsignal. Letzteres kann beispielsweise dazu benutzt werden, die Füllmaschine und ggf. auch die Verschlusseinrichtung automatisch abzuschalten bzw. deren Einschaltung zu blockieren.

Es ist auch denkbar, das Soll-Signal und die Toleranzen so einzustellen, dass eine Abweichung des Soll-Signals vom Ist-Signal bereits dann festgestellt und ein Warnsignal ausgegeben wird, wenn die Darmbremse ihre Füllposition statt ihre Arbeitsstellung verlassen hat. Man kann auch mit zwei Soll- und zwei Warnsignalen sowie entsprechenden Toleranzen arbeiten, so dass die Auswerteeinheit detektiert, ob sich die Darmbremse (a) in Arbeitsstellung und in Füllposition, (b) in Arbeitsstellung außerhalb der Füllposition und (c) außerhalb der Arbeitsstellung befindet.

Vorteilhafterweise ist die metallische Komponente rotationssymmetrisch in Bezug auf die Lage des Füllrohrs in Füllposition der Darmbremse angeordnet. Der dadurch erreichte Vorteil kommt dann zum Tragen, wenn sich die Wirkkomponente(n) der Darmbremse auf einem Drehteil befindet bzw. befinden, das drehbar um eine Drehachse parallel zum Füllrohr gelagert ist. Eine solche Drehbarkeit ist bei Anwendungen erwünscht, bei denen ein Darm verdrillt auf das Rohr aufgezogen wird, da er dann weniger Platz einnimmt. Beim Abziehen vom Rohr entspannt sich der Darm aus dieser Verdrillung. An der bzw. den Wirkkompontenten der Darmbremse tritt dann eine Scherkraft auf, die u.U. zu einem Reißen des Darms führen kann. Dieses Problem wird durch die besagte Drehbarkeit entschärft. Ist aber eine solche Drehbarkeit vorhanden, würden andere Sensormethoden, z.B. mit einem an der Darmbremse angebrachten Magneten, der von einem entsprechenden Sensor (z.B. Reed-Schalter) detektiert wird, versagen, da der Magnet bzw. die sonstige auf den Sensor wirkende Komponente infolge der Drehbewegung aus seiner Stellung gebracht würde; der Sensor könnte also nicht mehr unterscheiden, ob die Darmbremse aus ihrer Arbeitsstellung entfernt oder lediglich verdreht worden ist. Zwar ist es denkbar, dass die auf den Sensor wirkende Komponente an einem nicht zum Drehteil gehörenden Teil angebracht wird. Es gibt jedoch Konstruktionen, bei denen ein solcher Teil nicht vorhanden ist, weil die gesamte Darmbremse drehbar ist oder die übrigen Teile nicht zur Aufnahme einer auf einen Sensor wirkenden Komponente geeignet sind. In diesen Fällen kommt die Überlegenheit eines induktiven Sensors zum Tragen, wenn die metallische Komponente rotationssymmetrisch um die Drehachse angeordnet ist. In diesem Fall ist das metallische Material stets gleichmäßig im Messfeld verteilt, so dass eine Drehung des Drehteils nicht zu einer Änderung des Ausgangssignals des induktiven Sensors führt.

Vorteilhafterweise ist jedenfalls ein weiterer induktiver Sensor vorhanden, in dessen Messfeld sich ebenfalls eine metallische Komponente der Darmbremse befindet. Dies ermöglicht eine Redundanz: Eine Auswerteeinheit prüfen, ob die Sensoren zugleich ein geändertes Ausgangssignal liefern. Ist das nicht der Fall, liegt eine Fehlfunktion eines der Sensoren vor, so dass die Auswerteeinheit ein Fehlsignal auslösen kann. Bei mehreren Sensoren wären entsprechend mehr Soll-Signale aufzunehmen und von der Auswerteeinheit entsprechend mehr Vergleiche mit Ist-Signalen vorzunehmen.

Denkbar ist dabei, für jeden Sensor eine Auswerteeinheit mit einem eigenen Soll-Signal und ggf. einer Toleranz vorzusehen, so dass jede Auswerteeinheit ein Warnsignal liefert, das von einer übergeordneten Auswerteeinheit ausgewertet wird. Die Sensoren können bei einer solchen Anordnung so verschaltet sein, dass der eine eine Signalleitung schließt, wenn er eine relevante Abweichung des Ist- vom Soll-Signal feststellt, und der andere umgekehrt in einsem solchen Fall eine Signalleitung öffnet. In diesem Fall kann die übergeordnete Auswerteeinheit auch im Fall eines Kurzschlusses oder eines Kabelbruchs ein Warnsignal ausgeben.

Vorteilhafterweise befinden sich sich jedenfalls zwei Sensoren auf der der Füllmaschine zugewandten Seite der Darmbremse. Nach den Erfahrungen der Anmelderin hat sich dies aus Platzgründen als günstig erwiesen.

Vorteilhafterweise sind zumindest zwei Sensoren in der E-bense senkrecht auf die Drehachse um etwa 45° bezogen auf die Drehachse versetzt. Die Anmelderin konnte überraschend feststellen, dass man so eine raumsparende Anordnung der Sensoren insgesamt bei gleichzeitig besonders geringer gegenseitiger Beeinflussung der Sensoren erreicht.

Nicht jede Darmbremse eignet sich für jede Anwendung. Beispielsweise erfordern unterschiedliche Wurstkaliber im Regelfall unterschiedlich große Darmbremsen. Deshalb können für eine gattungsgemäße Maschine mehrere Darmbremsen vorhanden sein, die ausgewechselt werden.

In einem solchen Fall ist es vorteilhaft, dass mehrere austauschbare Darmbremsen metallische Komponenten in derselben Anordnung enthalten. Denkbar ist beispielsweise, dass die Darmbremsen insgesamt aus Kunststoff und/oder Gummi bestehen, jedoch alle von einem Metallring von gleicher Größe, gleicher Position und aus dem gleichen Material eingefasst sind. In diesem Fall ist das Ausgangssignal des induktiven Sensors für alle Darmbremsen gleich. Dies hat den Vorteil, dass der Wechsel der Darmbremse sich nicht auf die Auswertung des Ausgangssignals des Sensors bzw. die Ausgangssignale der Sensoren auswirkt. Beim Wechsel der Darmbremse muss kein neues Soll-Signal aufgenommen werden.

Man kann aber umgekehrt auch gerade mehrere austauschbare Darmbremsen mit metallischen Komponenten in unterschiedlicher Anordnung versehen, die in dem bzw. den induktiven Sensoren jeweils unterschiedliche Ausgangssignale auslösen. Auf diese Weise kann eine Auswerteeinheit zwischen den einzelnen Darmbremsen differenzieren, so dass automatisch überprüft werden kann, ob die gewählte Darmbremse zu der im Übrigen an der Maschine eingestellten Anwendung passt.

Denkbar ist etwa, dass für jede der Darmbremsen ein Soll-Signal aufgenommen wird, das gesondert gespeichert wird. Die Auswerteeinheit kann dann ständig prüfen, ob und ggf. welchem der Soll-Signale das Ist-Signal entspricht, und dann ein Warnsignal bzw. ein Signal, das für eine bestimmte Darmbremse steht, ausgeben.

Nachfolgend wird die Erfindung anhand eines Ausführungsbeispiels näher erläutert. Es zeigen:
- Fig. 1:: eine schematische Darstellung einer erfindungsgemäßen Maschine in der Seitenansicht;
- Fig. 2:: eine schematische Darstellung derselben Maschine in Blickrichtung A aus Fig. 1.

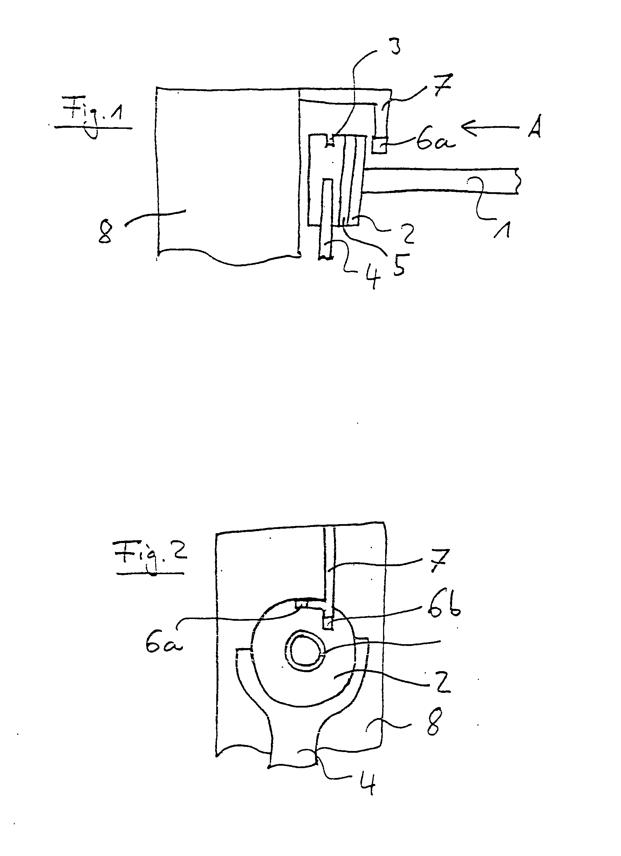

Ein in Fig. 1 abgeschnitten dargestelltes Füllrohr 1 mündet in eine Darmbremse 2, die sich in ihrer Arbeitsstellung befindet. Von der Darmbremse 2 ist hier das Gehäuse gezeigt. Die nicht dargestellte Wirkkomponente befindet sich im Gehäuseinneren. Die Darmbremse 2 weist an ihrem Umfang eine umlaufende Ringnut 3 auf, in die die halbkreisförmig angeordneten Arme eines Stativs 4 fassen. Auf diese Weise ist die Darmbremse 3 insgesamt sowohl in dem Stativ 4 drehbar gelagert als auch aus diesem entnehmbar, also aus ihrer dargestellten Arbeitsstellung lösbar.

Auf der Darmbremse 2 befindet sich ein umlaufender Metallring 5. Dieser befindet sich in dem Messfeld zweier induktiver Sensoren 6a und 6b, die in einer auf die Drehachse der Darmbremse 2 senkrechten Ebene und bezogen auf die Drehachse um 45° versetzt angeordnet sind. Die Sensoren 6a, 6b sind über einen Träger 7 an der schematisch als abgeschnittener Block dargestellten Verschlusseinrichtung 8 befestigt.

## Patentansprüche

1. Verpackungsmaschine für die Wurstherstellung mit eine Füllrohr (1) und einer Darmbremse (2) mit wenigstens einer Wirkkomponente, wobei die Darmbremse (2) aus ihrer Arbeitsstellung lösbar ist und eine metallische Komponente (5) aufweist, **dadurch gekennzeichnet, dass** ein induktiver Sensor (6a) mit einem Messfeld vorgesehen ist, das so ausgerichtet ist, dass es die metallische Komponente (5) der Darmbremse (2) in ihrer Arbeitsstellung erfasst.

2. Verpackungsmaschine gemäß Schutzanspruch 1, **dadurch gekennzeichnet, dass** die metallische Komponente (5) rotationssymmetrisch um die Drehachse angeordnet ist.

3. Verpackungsmaschine nach einem der vorgenannten Schutzansprüche, **dadurch gekennzeichnet, dass** ein zweiter induktiver Sensor (6b) mit einem Messfeld vorgesehen ist und sich eine metallische Komponente (5) der Darmbremse (2) im Messfeld des zweiten Sensors (6b) befindet.

4. Verpackungsmaschine nach Schutzanspruch 3, **dadurch gekennzeichnet, dass** dieselbe metallische Komponente (5) der Darmbremse (2) sich in den Messfeldern des ersten (6a) und des zweiten Sensors (6b) befindet.

5. Verpackungsmaschine nach Schutzanspruch 3 oder 4, **dadurch gekennzeichnet, dass** sich zwei Sensoren (6a, 6b) auf der der Füllmaschine zugewandten Seite der Darmbremse (2) befinden.

6. Verpackungsmaschine nach Schutzanspruch 5, **dadurch gekennzeichnet, dass** die beiden Sensoren (6a, 6b) in der Ebene senkrecht auf das Füllrohr (1) um etwa 45° bezogen auf die Mitte des Rohrs (1) versetzt sind.

7. Verpackungsmaschine nach einem der vorgenannten Schutzansprüche, **dadurch gekennzeichnet, dass** mehrere austauschbare Darmbremsen (2) vorhanden sind, die metallische Komponenten in derselben Anordnung enthalten.

8. Verpackungsmaschine nach einem der Ansprüche 1 bis 6, **dadurch gekennzeichnet, dass** mehrere austauschbare Darmbremsen (2) vorhanden sind, die metallische Komponenten (5) in unterschiedlicher Anordnung enthalten, die in dem bzw. den induktiven Sensoren (6a, 6b) jeweils unterschiedliche Ausgangssignale auslösen.

## Claims

1. A packaging machine for sausage production, with a filling pipe (1) and a skin brake (2) with at least one active component, the skin brake (2) being releasable from its working position and having a metallic component (5), **characterized in that** an inductive sensor (6a) with a measuring field is provided which is oriented in such a manner that it detects the metallic component (5) of the skin brake (2) in its working position.

2. The packaging machine as claimed in patent claim 1, **characterized in that** the metallic component (5) is arranged in a rotationally symmetrical manner around the axis of rotation.

3. The packaging machine as claimed in one of the abovementioned patent claims, **characterized in that** a second inductive sensor (6b) with a measuring field is provided and a metallic component (5) of the skin brake (2) is situated in the measuring field of the second sensor (6b).

4. The packaging machine as claimed in patent claim 3, **characterized in that** the same metallic component (5) of the skin brake (2) is situated in the measuring fields of the first sensor (6a) and of the second sensor (6b).

5. The packaging machine as claimed in patent claim 3 or 4, **characterized in that** two sensors (6a, 6b) are situated on that side of the skin brake (2) which faces the filling machine.

6. The packaging machine as claimed in patent claim 5, **characterized in that** the two sensors (6a, 6b) are offset by approximately 45° with respect to the center of the pipe (1) in the plane perpendicular to the filling pipe (1).

7. The packaging machine as claimed in one of the abovementioned patent claims, **characterized in that** there are a plurality of exchangeable skin brakes (2) which contain metallic components in the same arrangement.

8. The packaging machine as claimed in one of claims 1 to 6, **characterized in that** there are a plurality of exchangeable skin brakes (2) which contain metallic components (5) in a different arrangement which each trigger different output signals in the inductive sensor or inductive sensors (6a, 6b).

## Revendications

1. Machine de conditionnement pour la fabrication de saucisses comportant un tuyau de remplissage (1) et un avec au moins un composant actif, le frein de boyau (2) pouvant être dissocié de sa position de travail et présentant un composant métallique (5) **caractérisée en ce qu'**il est prévu un capteur inductif (6a) avec un champ de mesure qui est agencé de sorte qu'il détecte le composant métallique (5) du frein de boyau (2) dans sa position de travail.

2. Machine de conditionnement selon la revendication 1, **caractérisée en ce que** le composant métallique (5) est disposé avec une symétrique de rotation autour de l'axe de rotation.

3. Machine de conditionnement selon l'un des revendications précédentes, **caractérisée en ce qu'**il est prévu un second capteur inductif (6b) avec un champ de mesure et qu'un composant métallique (5) du frein de boyau (2) se trouve dans le champ de mesure du second capteur (6b).

4. Machine de conditionnement selon la revendication 3, **caractérisée en ce que** le même composant métallique (5) du frein de boyau (2) se trouve dans les champs de mesure du premier (6a) et du second (6b) capteurs.

5. Machine de conditionnement selon la revendication 3 ou 4, **caractérisée en ce qu'**il y a deux capteurs (6a, 6b) sur le côté du frein de boyau (2) tourné vers la machine de remplissage.

6. Machine de conditionnement selon la revendication 3, **caractérisée en ce que** les deux sont décalés dans le plan perpendiculaire au tuyau de remplissage (1) d'environ 45° par rapport au milieu du tuyau (1).

7. Machine de conditionnement selon l'une des revendications précédentes, **caractérisée en ce que** sont prévus plusieurs freins de boyau (2), contenant des composants métalliques agencés de la même manière.

8. Machine de conditionnement selon l'un des revendications 1 à 6, **caractérisée en ce que** sont prévus plusieurs freins de boyau (2), contenant des composants métalliques (5), agencés de manières différentes, qui produisent dans le ou les capteurs inductif(s) (6a, 6b) des signaux de sortie différents respectifs.
